(19) Europäisches Patentamt
European Patent Office
Office européen des brevets

(11) **EP 4 263 460 B1**

(12) **EUROPEAN PATENT SPECIFICATION**

(45) Date of publication and mention of the grant of the patent:
**22.01.2025 Bulletin 2025/04**

(21) Application number: **21835781.2**

(22) Date of filing: **21.12.2021**

(51) International Patent Classification (IPC):
***C04B 24/24*** *(2006.01)* ***C04B 24/26*** *(2006.01)*
***C04B 24/28*** *(2006.01)* ***C04B 28/02*** *(2006.01)*
***C04B 28/04*** *(2006.01)*

(52) Cooperative Patent Classification (CPC):
(C-Sets available)
**C04B 24/281; C04B 24/246; C04B 24/2652; C04B 28/021; C04B 28/04;** Y02W 30/91 (Cont.)

(86) International application number:
**PCT/EP2021/087096**

(87) International publication number:
**WO 2022/136435 (30.06.2022 Gazette 2022/26)**

(54) **LOW CARBON CONCRETE COMPOSITION AND A METHOD TO PRODUCE A LOW CARBON CONCRETE COMPOSITION**

KOHLENSTOFFARME BETONZUSAMMENSETZUNG UND VERFAHREN ZUR HERSTELLUNG EINER KOHLENSTOFFARMEN BETONZUSAMMENSETZUNG

COMPOSITION DE BÉTON À FAIBLE TENEUR EN CARBONE ET PROCÉDÉ DE PRODUCTION D'UNE COMPOSITION DE BÉTON À FAIBLE TENEUR EN CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(30) Priority: **21.12.2020 EP 20306645**

(43) Date of publication of application:
**25.10.2023 Bulletin 2023/43**

(73) Proprietor: **Holcim Technology Ltd**
**6300 Zug (CH)**

(72) Inventors:
- **CARNEVALE, Kevin**
  **38070 Saint Quentin Fallavier (FR)**
- **RINALDI, David**
  **38070 Saint Quentin Fallavier (FR)**
- **MATHONIER, Benoît**
  **38070 Saint Quentin Fallavier (FR)**
- **TOUSSAINT, Fabrice**
  **38070 Saint Quentin Fallavier (FR)**

(74) Representative: **Regimbeau**
**20, rue de Chazelles**
**75847 Paris Cedex 17 (FR)**

(56) References cited:
**EP-A1- 0 663 892** **EP-B1- 0 663 892**
**WO-A1-2015/063419** **WO-A2-2010/040915**

EP 4 263 460 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C04B 28/021, C04B 7/02, C04B 14/12, C04B 14/28, C04B 18/141, C04B 18/146, C04B 20/008, C04B 20/0096, C04B 24/24, C04B 24/2652, C04B 40/0608;**
**C04B 28/04, C04B 14/12, C04B 14/28, C04B 18/08, C04B 18/141, C04B 18/146, C04B 20/008, C04B 20/0096, C04B 24/246, C04B 24/281, C04B 40/0608**

## Description

The invention relates to a low carbon concrete composition and a method to produce a low carbon concrete composition, as well as to a premix comprising hydraulic binder and admixtures.

Concrete is a very widely used construction material with high strength and good durability. In addition to sand and/or aggregates and water, it also contains Portland cement as a hydraulic binder, which produces strength-forming phases by solidifying and curing in contact with water. Concrete based on Portland cement clinker is thus one of the most important binders worldwide.

By adding various mineral components, such as, e.g., granulated blast-furnace slag, fly ash, natural pozzolans, calcined clays or ground limestone to Portland cement, Portland composite cements having different properties can be produced. At the same time, the carbon dioxide footprint of the cement can be reduced by substituting Portland clinker by the cited mineral components. The production of Portland clinker results in high carbon dioxide emissions, emitted during the calcination and decarbonation of the raw materials, and from the burning of the fuels to heat the kiln to the desired temperature of about 1 ’450°C. The use of mineral components in Portland cement has been an established practice for more than 100 years and is regulated in numerous cement and concrete standards.

The mineral additions, typically between 10 and 40% by weight of the total weight of binder weight, are in most applications ground granulated blast furnace slag, fly ash, pozzolans, ground limestone or mixtures thereof. It is known that in such composite binders, increasing the content of the mineral components negatively affects the strength development of hardened concrete, and delays the setting times.

Also, when concrete compositions are prepared using binders that contain high amounts of mineral components, other problems may occur. A typical problem is a poor rheology, and more precisely a significant increase in viscosity.

The present invention aims at solving this problem, by providing a low carbon concrete composition, which is characterized by a reduced viscosity, shortened setting times, and satisfactory strength development. The present invention is also directed to method of preparation of this low carbon concrete composition. Thanks to a reduced content in Portland clinker in the binder, emissions of carbon dioxide during manufacturing are also reduced.

WO 2010/040915 A2 as well as WO 2015/063419 A1 both disclose compositions comprising inter alia a pozzolanic compound in combination with a cationic polymer and a (super)plasticizer.

## OBJECT OF THE INVENTION

The invention has for object a concrete composition comprising:

- a hydraulic binder, wherein the hydraulic binder comprises Portland clinker and mineral addition selected from the group consisting of limestone, fly ash or combination thereof, the limestone and/or fly ash representing at least 50% by weight of the total weight of the binder;
- a cationic polymer having a cationic charge density greater than 0.5 meq/g, preferably greater than 1.0 meq/g, and an intrinsic viscosity less than 1 dl/g;
- a water-reducing additive comprising at least one phosphonic amino-alkylene group;
- aggregates, and
- water.

Advantageously, limestone and/or fly ash represents at least 60% by weight of the total weight of the binder.

Preferably, limestone is in the form of particles having a Dv90 less than or equal to 200 μm, and preferably a Dv97 less than or equal to 200 μm. In particular, limestone is in the form of particles and is composed of:

- a fraction of coarse particles having a D50 comprised between 10 and 30 μm; and
- a fraction of fine particles having a D50 comprised between 1 and 6 μm.

Preferably, fly ash is in the form of particles having a Dv50 comprised between 30 to 60 μm.

The hydraulic binder may further comprise up to 15% by weight, compared to the total weight of the binder, of additional mineral component, such as slag, calcined clay, silica fume and combinations thereof.

Preferably, the water to binder ratio is comprised between 0.18 and 0.30, preferentially between 0.20 and 0.25.

Preferably, the cationic polymer comprises cationic groups selected from the group comprising phosphonium group, pyridinium group, sulphonium group, quaternary amine group and combination thereof.

The cationic polymer may be obtained by polycondensation of epichlorohydrin with a mono-or dialkylamine, in particular methylamine or dimethylamine.

Preferably, the cationic polymer content ranges from 0.0001 % to 1% by weight, preferentially from 0.001 % to 0.5% by weight, more preferentially from 0.01% to 0.1% by weight of the total weight of the binder.

Preferably, the water-reducing additive comprising at least one phosphonic amino-alkylene group further comprises a poly oxyalkyl chain.

The water-reducing additive comprising at least one phosphonic amino-alkylene group may correspond to compound having the formula (1):

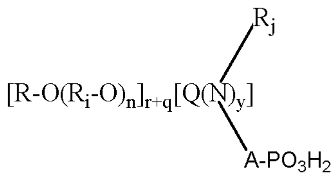
(1)

in which:

- R is a hydrogen atom or a monovalent hydrocarbon group with 1 to 18 carbon atoms and optionally one or more hetero atoms;
- the $R_i$ are similar or different and represent an alkylene for example ethylene, propylene, amylene, octylene or cyclohexene or an arylene, for example styrene or methylstyrene, the $R_i$ optionally comprising one or more hetero atoms;
- Q is a hydrocarbon group with 2 to 18 carbon atoms and optionally one or more hetero atoms;
- A is an alkylidene group with 1 to 5 carbon atoms;
- the $R_j$ are similar or different and may be selected from:

  *the $A\text{-}PO_3H_2$ group, A having the aforesaid meaning;
  *an alkyl group with 1 to 18 carbon atoms and being able to carry $[R\text{-}O(R_i\text{-}O)_n]$ groups, R and $R_i$ having the aforesaid meanings;
  *and the group:

  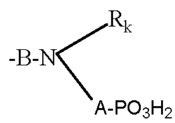

    - $R_k$ designating a group such as $R_j$;
    - B designating an alkylene group with 2 to18 carbon atoms;

- "n" is a number greater than or equal to 0;
- "r" is the sum of the $[R\text{-}O(R_i\text{-}O)_n]$ groups carried by all the $R_j$;
- "q" is the number of $[R\text{-}O(R_i\text{-}O)_n]$ groups carried by Q;
- the sum "r+q" is from 1 to 10;
- "y" is an integer from 1 to 3;
- Q, N and the $R_j$ can form together one or more cycles, this or these cycles further being able to contain one or more other hetero atoms.

The water-reducing additive comprising at least one phosphonic amino-alkylene group may correspond to compound having the formula (3):

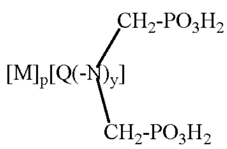
(3)

in which:

- M is a linear or branched hydrocarbon group optionally comprising one or more hetero atoms;
- Q is a hydrocarbon group with 2 to 18 carbon atoms and optionally one or more hetero atoms;
- "p" is the number of [M] groups carried by Q, p being from 1 to 10; and

- "y" is an integer from 1 to 3.

Preferably, the content of water reducing agent comprising at least one phosphonic amino-alkylene group ranges from 0.01% to 2% by weight, preferentially from 0.05% to 1% by weight, more preferentially from 0.1% to 0.5% by weight of the total weight of the binder. Preferably, the weight ratio (water reducing agent comprising at least one phosphonic amino-alkylene group) / (cationic polymer) preferably ranges from 2 to 8, more preferably from 3 to 6.
The invention has also for object a pre-mix comprising:

- a hydraulic binder, as defined above and below;
- a cationic polymer as defined above and below; and
- water-reducing additive comprising at least one phosphonic amino-alkylene group as defined above and below.

The invention has also for object a process for preparing concrete composition, comprising mixing of:

- the hydraulic binder as defined above and below,
- the cationic polymer as defined above and below,
- the water-reducing additive comprising at least one phosphonic amino-alkylene group as defined above and below,
- water,
- aggregates.

The invention has also for object a hardened concrete object based on the concrete composition as defined above and below.
The invention has also for object the use of a cationic polymer as defined above and below to reduce the setting time of a concrete composition comprising:

- a hydraulic binder, wherein the hydraulic binder comprises Portland clinker and mineral addition selected from the group consisting of limestone, fly ash or combination thereof, the limestone and/or fly ash representing at least 50% by weight of the total weight of the binder, as defined above and below;

- water-reducing additive comprising at least one phosphonic amino-alkylene group as defined above and below.

**DESCRIPTION OF THE FIGURES**

Figure 1: setting time (in hours) in function of the temperature (°C) for a mortar composition (dark grey) comprising 0.19% of PCE, % being expressed in weight of solid content compared to the total weight of the binder, or for a mortar composition (light grey) comprising 0.14% of PCE and 0.05% of cationic polymer, % being expressed in weight of solid content compared to the total weight of the binder
Figure 2: setting time (in hours) in function of the temperature (°C) for a mortar composition (dark grey) comprising 0.24 of PAE, % being expressed in weight of solid content compared to the total weight of the binder, or for a mortar composition (light grey) comprising 0.20% of PAE and 0.05% of cationic polymer, % being expressed in weight of solid content compared to the total weight of the binder
Figure 3: setting time (in hours) in function of the temperature (°C) for a mortar composition (dark grey) comprising 0.33 of phosphonate type polymer, % being expressed in weight of solid content compared to the total weight of the binder, or for a mortar composition (light grey) comprising 0.23% of phosphonate type polymer and 0.05% of cationic polymer, % being expressed in weight of solid content compared to the total weight of the binder

**DEFINITIONS and METHODS**

As used herein, the term "concrete" refers to a composition comprising hydraulic binder and aggregates which in presence of water forms a paste which sets and hardens by means of hydration reactions and processes and which, after hardening, retains its strength and stability even under water. When the aggregates are sand only, the composition is usually called "mortar". Specifically, concrete is as defined in standard EN 197-1 of April 2012. The terms "concrete" and "concrete composition" will have the same meaning in the present disclosure.
As used herein, the term "premix" refers to a composition comprising hydraulic binder and admixture, the composition is suitable to be mixed with water and aggregates for preparing a concrete.
As used herein, the term « hydraulic binder » refers to a material which sets and hardens by hydration, for

example cement. Preferably, the cement is a defined in standard NF EN 197-1 of April 2012.The terms "binder" and "hydraulic binder" will have the same meaning in the present disclosure.

As used herein, the term "admixture" refers to a material other than water, aggregates, hydraulic binder, and fiber reinforcement that is used as an ingredient of concrete composition to modify its freshly mixed, setting, or hardened properties and that is added to the batch before or during its mixing. The terms "admixture" and "chemical admixture" will have the same meaning in the present disclosure.

As used herein, the term "water reducing agent" refers to an admixture which reduces the amount of mixing water by 5% to 30% in weight, preferably by 10% to 30% in weight, for a given workability. Water reducing agents that reduce the amount of mixing water by 15% to 30% in weight are also called superplasticizers.

As used herein, the term "clays" refers to aluminium silicates and/or magnesium silicates, in particular phyllosilicates with a layered structure, the layers typically having a separation of approximately 7 to approximately 14 Angstroms. In the sands, montmorillonite, illite, kaolinite, muscovite and chlorites are encountered in particular. The clays can be of 2:1 type but also of 1:1 type (kaolinite) or of 2:1:1 type (chlorites). The term "swelling clays" refers to clays which have cations in their interlayer spaces capable of hydrating in the presence of water (vapour or liquid). Swelling clays, generically referred to as smectites, comprise in particular clays of 2:1 type, such as montmorillonite.

As used herein, the term "inerting of clay" refers to at least partial neutralization of the harmful effects due to the presence of the clay in a concrete composition.

<u>Determination of D10, D50, D90, D97 of particles distribution</u>

The D10 corresponds to the 10th centile of the volume distribution of particle sizes, i.e. 10% of the volume consists of particles for which the size is less than D10 and 90% with a size greater than D10. The D50 corresponds to the median or 50th centile of the volume distribution of particle sizes, i.e. 50% of the volume consists of particles for which the size is less than D50 and 50% with a size greater than D50. The D90 corresponds to the 90th centile of the volume distribution of particle sizes, i.e. 90% of the volume consists of particles for which the size is less than D90 and 10% with a size greater than D90. The D97 corresponds to the 97th centile of the volume distribution of particle sizes, i.e. 97% of the volume consists of particles for which the size is less than D97 and 3% with a size greater than D97.

The D10, D50, D90, D97 of particles is generally determined by laser diffraction. The particle size distribution of the different powders are obtained with a laser Malvern MS2000 granulometer. The measurement is carried out in a suitable medium (for example, in an aqueous medium); the size of the particles should be comprised between 0.02 μm and 2 mm. The light source consists of a red He-Ne laser (632 nm) and a blue diode (466 nm). The optical model is the Fraunhofer one, the computation matrix is of the polydisperse type. A measurement of background noise is first of all carried out with a pump rate of 2,000 rpm, a stirring rate of 800 rpm and a measurement of noise over 10 s, in the absence of ultrasonic waves. It is then checked that the light intensity of the laser is at least equal to 80%, and that a decreasing exponential curve is obtained for the background noise. If this is not the case, the lenses of the cell have to be cleaned.

A first measurement is then carried out on the sample with the following parameters: pump rate of 2,000 rpm, stirring rate of 800 rpm, absence of ultrasonic waves, obscuration limit between 10 and 20%. The sample is introduced in order to have an obscuration slightly greater than 10%. After stabilization of the obscuration, the measurement is carried out with a duration between the immersion and the measurement set to 10 s. The measurement duration is of 30 s (30,000 analyzed diffraction images). In the obtained granulogram, the fact that a portion of the population of the powder may be agglomerated should be taken into account.

Next a second measurement (without emptying the tank) is then carried out with ultrasonic waves. The pump rate is brought to 2,500 rpm, the stirring to 1,000 rpm, the ultrasonic waves are 100 % emitted (30 Watts). This rate is maintained for 3 minutes, and then one returns to the initial parameters: pump rate 2,000 rpm, stirrer rate of 800 rpm, absence of ultrasonic waves. After 10 s (for removing the possible air bubbles), a measurement is made for 30 s (30,000 analyzed images). This second measurement corresponds to a powder de-agglomerated by ultrasonic dispersion.

Each measurement is repeated least twice in order to check the stability of the result. The apparatus is calibrated before each working session by means of a standard sample (silica C10 Sifraco) the grain size curve of which is known. All the measurements shown in the description and the announced ranges correspond to the values obtained with ultrasonic waves.

<u>Molecular weight of cationic polymer</u>

The molecular weight of the cationic polymers can be determined by chromatographic analysis or from the intrinsic viscosity according to the formula of Mark-Houwink:

$$IV = K.Mr^a$$

IV: intrinsic viscosity
Mr: average molecular weight
K and a: constants depending on the polymer, the solvent and the temperature.

The measurements of the intrinsic viscosity of the cationic polymers are done with a capillary viscometer such as the Ubbelhode type in a solution of 3M NaCl at 25°C.

The flowing time of the solvent and the solutions of the polymer at different concentrations are measured in a capillary tube between two marks. The intrinsic viscosity is obtained from the « reduced » viscosities at different concentrations.

For more details concerning this measurement, the following work is recommended: Encyclopedia of Polymer Science & Technology, Editors Mark and Gaylord, published John Wiley & Sons, 1971, Vol.14, p. 717-740.

Charge density of cationic polymer

The density of the cationic charge (cationicity) given in meq/g represents the quantity of charges (in mmol) carried by 1g of polymer. This value can be measured by colloidal titration or by pH titration.

The charge density of a cationic polymer can be measured by an anionic polymer with a known level of ionicity, for example potassium polyvinylsulphate, in the presence of an indicator for which the color depends on the nature of the excess polymer.

Specifically, the cationicity can be determined in the following manner:
60 ml of a buffer solution of sodium phosphate at 0.001 M, pH 6 and 1 ml of o-toluidine blue solution at $4.1.10^{-4}$ M, then 0.5 ml of cationic polymer solution to be measured are introduced into an appropriate container.

This solution is titrated with a solution of potassium polyvinylsulphate until the indicator changes.

The cationicity is obtained with the following relationship:

$$\text{Cationicity (meq/g)}=(V_{epvsk} \times N_{pvsk})/(V_{pc} \times C_{pc})$$

where:

$V_{pc}$ is the volume of cationic polymer solution;
$C_{pc}$ is the concentration of cationic polymer in solution;
$V_{epvsk}$ is the volume of potassium polyvinylsulphate solution; and
$N_{pvsk}$ is the normality of the potassium polyvinylsulphate solution.

MORTAR TRIALS

Slump flow

The principle of the spread measurement consists in filling a truncated spread measurement cone with the hydraulic composition to be tested, then releasing the said composition from the said truncated spread measurement cone in order to determine the surface of the obtained disk when the hydraulic composition has finished spreading. The truncated spread measurement cone corresponds to a reproduction at the scale Y2 of the cone as defined by the NF P 18-451 Standard, 1981. The truncated spread measurement cone has the following dimensions:

top diameter: 50+/-0.5 mm;
bottom diameter: 100+/-0.5 mm; and
height: 150+/-0.5 mm.

The entire operation is carried out at 20° C. The spread measurement is carried out in the following manner:

- Fill the reference cone in one single time with the hydraulic composition to be tested;
- If necessary, tap the hydraulic composition to homogenously distribute it in the truncated cone;
- Level the top surface of the cone;
- Lift the truncated cone vertically; and
- Measure the spread according to four diameters at 45° with a calliper square.

The result of the spread measurement is the average of the four values, +/-1 mm.

Viscosity - O-funnel

The viscosity measurement consists in measuring the flow time through a truncated viscosity measurement cone of a hydraulic composition to be tested. The truncated viscosity measurement cone has the following dimensions:

- larger diameter: 150 mm; and
- smaller diameter: 26 mm.

The truncated viscosity measurement cone further comprises first and second marks which may be parallel marks provided on the sides of the truncated cone and defining planes perpendicular to the axis of the truncated cone. The first mark is closer to the base of the larger diameter than the second mark. The distance between the two marks is 60 mm, the first mark being at 12 mm from the base with the larger diameter.

The entire operation is carried out at 20 °C. The viscosity measurement of a concrete composition is carried out in the following manner:

- Orient the axis of the truncated cone vertically, the smaller diameter being oriented downwards and being obturated by a plug;
- Fill the truncated cone with the concrete composition up to above the first mark;
- Tap the concrete composition with a spatula in order to ensure the absence of big air bubbles;
- Remove the plug;
- Start the stopwatch when the level of concrete composition passes the first mark;
- Stop the stop watch when the level of concrete composition passes the second mark; and
- Record the time, which represents the viscosity of the concrete composition.

Strength

The strength is measured by preparing cement mortars. The detailed protocol is described in the European cement Standard EN 196-1 (September 2016), the only difference is that polystyrene moulds are used instead of steel moulds.

The test is carried out at 20°C.

The cement mortars are prepared as follows:

The mortar is made using a Perrier type of mixer. The entire operation is carried out at 20°C. The preparation method comprises the following steps:

- Put the sands in a mixer bowl;
- At T=0 second: start the mixing at low speed (140 rpm) and simultaneously add the wetting water in 30 seconds, then continue to mix at low speed (140 rpm) until 60 seconds;
- At T=1 minute: stop the mixing and let rest for 4 minutes;
- At T=5 minutes: (T0 for the measurement method of the setting time): add the hydraulic binder;
- At T=6 minutes: mix at low speed (140 rpm) for 1 minute;
- At T=7 minutes: add the mixing water (+cationic polymer and water-reducing additive) in 30 seconds (whilst mixing at low speed (140 rpm)); and
- At T=7 minutes and 30 seconds: mix at high speed (280 rpm) for 2 minutes.

Setting time

The setting times is measured by maturometry, by measuring the temperature within the concrete composition as a function of time. As the chemical reactions that induce the setting of cement upon addition of water are exothermic, measuring the temperature of the concrete composition as a function of time provides a comparative assessment of setting times.

The testing protocol is the following:

- Mixing the hydraulic binder, aggregates and dried chemical admixture if any
- Adding water and liquid chemical admixture if any
- 20 minutes after adding water to the concrete composition, around 200 grams of fresh concrete composition is placed in a cylinder receptacle (4-6cm for the basis, 10cm height),
- This receptacle is placed in a semi-adiabatic chamber whose dimensions are only slightly larger (diameter close to 8cm maximum) than those of the receptacle to limit thermal exchanges,

- A temperature sensor is placed in the fresh concrete composition and temperature is measured over time.

CONCRETE TRIALS

Slump flow

Slump flow is measured according to the protocol described in the standard NF EN 12350-8 (June 2019).

Viscosity - Reverse Abrams

The viscosity measurement consists in measuring the time for the concrete to get out the Abrams cone placed inverse position (kind of truncated viscosity Abrams cone)

Strength

The strength is measured in agreement with the standard NFEN 12390-3 (June 2019). The test is carried out at 20°C.

**DETAILED DESCRIPTION**

The concrete composition of the present invention comprises binder, admixtures, water, aggregates. It is suitable for use in any known concrete applications. In particular, the concrete composition is more suitable for structural concrete applications.
The pre-mix of the present invention comprises binder and admixtures.
These components are as disclosed below.

Binder

In the present invention, the binder comprises Portland clinker, a mineral addition selected from the group consisting of limestone, fly ash or combination thereof, and optionally other mineral components.
Limestone and/or fly ash is the main constituent in weight of the binder, i.e. representing at least 50% by weight, even more preferentially at least 60% by weight of the total weight of the binder.
Preferably, the limestone and/or fly ash content ranges from 50% to 90% by weight, preferentially from 50 to 85% by weight, more preferentially from 60% to 80% by weight of the total weight of the binder.
Preferably, the mineral addition is composed of 60% to 100% limestone, more preferably 80% to 100%, in weight by total weight of the mineral components.
The limestone used in the binder is as defined in the standard EN197-1 of April 2012. It comprises ground calcium carbonate, the calcium carbonate content calculated from the calcium oxide content is at least 75% by weight of the weight of the limestone. Preferentially, the clay content, determined by the methylene blue test in accordance with EN 933-9 of June 2013, shall not exceed 1.2% by weight of the total weight of the limestone. The total organic carbon (TOC) content, when tested in accordance with EN 13639 of September 2017, shall not exceed 0.5% by weight of the total weight of the limestone.
Advantageously, limestone used in the binder is in the form of particles having a Dv90 less than or equal to 200 μm, and preferably a Dv97 less than or equal to 250 μm. Advantageously, limestone used in the binder is in the form of particles having a Dv90 ranging from 30 to 200 μm, preferably in the form of particles having a Dv97 ranging from 50 to 200 μm. Advantageously, limestone used in the binder is in the form of particles having a Dv50 ranging from 10 to 30 μm, advantageously ranging from 15 to 30 μm.
Advantageously, the limestone used in the binder is composed of several fractions, such as two fractions, characterized by different finenesses. Using several fractions of limestone has the advantage of improving the particle packing density of the binder, and the concrete. This will improve both the rheology and the strength development of the resulting concrete. A good particle packing of the binder can be achieved by using two fractions of ground limestone:

- a coarser fraction having a D50 comprised between 10 and 30 μm, and
- a finer fraction having a D50 comprised between 1 and 6 μm.

In case two fractions of limestones are used, the weight ratio between the coarser fraction and the finer fractions is comprised between 2 and 7, preferentially between 3 and 6.
The fly ash used in the binder is as defined in the standard EN197-1 of April 2012. Fly ash is generally obtained by

electrostatic or mechanical precipitation of dust-like particles from the flue gases from furnaces fired with pulverized coal. Fly ash may be siliceous or calcareous in nature.

Siliceous fly ash consists essentially of reactive silicon dioxide and aluminium oxide. The remainder contains iron oxide and other compounds. The proportion of reactive calcium oxide is preferably less than 10% by mass. The reactive silicon dioxide content is preferably more than 25% by mass.

Calcareous fly ash consists essentially of reactive calcium oxide, reactive silicon dioxide and aluminium oxide. The remainder contains iron oxide and other compounds. The proportion of reactive calcium oxide is preferably more than 10.0% by mass, more preferably more than 15% by mass.

Advantageously, fly ash used in the binder is in the form of particles having a Dv50 comprised between 30 to 60 μm.

Portland clinker is as defined in the standard EN197-1 of April 2012, and is made by sintering a precisely specified mixture of raw materials (raw meal, paste or slurry) containing elements, usually expressed as oxides, CaO, SiO2, Al2O3, Fe2O3 and small quantities of other materials. The raw meal, paste or slurry is finely divided, intimately mixed and therefore homogeneous. Portland clinker is a hydraulic material which shall consist of at least two-thirds by mass of calcium silicates (3CaO · SiO2 and 2CaO · SiO2), the remainder consisting of aluminium and iron containing clinker phases and other compounds. The weight ratio (CaO)/(SiO2) shall be not less than 2.0 and the content of magnesium oxide (MgO) shall not exceed 5.0 % by weight, compare to the total weight of the Portland clinker.

Preferably, the Portland clinker content ranges from 10 to 50% by weight, preferentially from 13 to 50% by weight, more preferentially from 15 to 40% by weight of the total weight of the binder.

The binder may optionally contain additional mineral components, which are different from the limestone or fly ash described above. All those listed in the cement standards EN 197-1 of April 2012, except limestone and fly ash, are suitable. Granulated blast furnace slags, pozzolanic materials such as calcined clays, burnt shale, silica fume and combinations thereof are particularly advantageous. More specifically, slag, calcined clay and combinations thereof are particularly advantageous. More specifically, silica fume is particularly advantageous when the mineral addition is fly ash.

Preferably, the additional mineral component does not constitute more than 20% by weight of the total weight of the binder. Preferably, the additional mineral component content ranges from 0% to 20% by weight, more preferably from 0% to 15% by weight, even more preferably from 0% to 10% by weight of the total weight of the binder.

Advantageously, the binder consists in Portland clinker, limestone and/or fly ash, and optionally other mineral components disclosed above.

Advantageously, the concrete composition or the premix does not comprise other hydraulic binder than the binder disclosed above.

## Calcium sulphate

The concrete composition or the premix may further comprise calcium sulphate.

Calcium sulphate used according to the present invention includes gypsum (calcium sulphate dihydrate, $CaSO_4.2H_2O$), hemi-hydrate ($CaSO_4.1/2H_2O$), anhydrite (anhydrous calcium sulphate, $CaSO_4$) or a mixture thereof. The gypsum and anhydrite exist in the natural state. Calcium sulphate produced as a by-product of certain industrial processes may also be used. Preferably, the calcium sulphate content ranges from 0% to 5% by weight for 100% in weight of binder.

## Water

As used herein, the term "water" used with regard to the concrete composition preferably relates to the water added for mixing and the water of the admixtures, such as the water of water reducing agent.

The water content is expressed in a water to binder weight ratio. The water to binder ratio is preferentially comprised between 0.18 and 0.35, more preferentially between 0.20 and 0.30.

## Aggregates

Any known aggregates suitable for the preparation of concrete may be used for the present invention. The aggregates have advantageously a maximum size of 32 mm.

The aggregates can comprise or consist in sand.

Any known sand suitable for the preparation of concrete is suitable for the present invention. The sand has advantageously a maximum size of 5 mm, preferentially 4 mm. The sand has advantageously a minimum size of 0 mm or of 0.063 mm. Preferably, the sand is a siliceous sand such as quartz sand, a calcined or non-calcined bauxite sand, a silica-calcareous sand or mixtures thereof.

The concrete composition will advantageously comprise:

- at least 10% of the binder, admixtures and optionally calcium sulphate; and
- up to 90 % of aggregates,

the percentages corresponding to proportions relative to the total dry volume.

When the aggregates comprise sand and gravel, the mass ratio of the quantity of sand to the quantity of gravel is preferably from 1.5:1 to 1 :1.8, more preferably from 1.25:1 to 1:1.4, even more preferably from 1.2:1 to 1:1.2.

Chemical admixtures

The concrete composition and the premix of the present invention contain chemical admixtures.

It was surprisingly found that the combination of a clay inerting agent and of a water reducing agent comprising at least one phosphonic amino-alkylene group has a positive impact on concrete viscosity, flow, setting times and compressive strength. Furthermore, it was surprisingly found that the combination of both of these admixtures has a synergistic effect.

The clay inerting agent is a cationic polymer, having a cationic charge density of strictly higher than 0.5 meq/g, preferably strictly higher than 1 meq/g. Examples are disclosed in WO2006/032785, WO2007/090948 and WO2011/107704. The cationic polymer is advantageously as further detailed below.

Preferably, the cationic polymer content ranges from 0.0001% to 1% by weight, preferentially from 0.001% to 0.5% by weight, more preferentially from 0.01% to 0.1% by weight of the total weight of the binder.

Examples of the water reducing agent comprising at least one phosphonic amino-alkylene group are disclosed in EP0663892 and WO2011/015781. They are preferably diphosphonate compounds. They are compounds comprising a poly oxyalkylene chain and a phosphonic amino-alkylene group. The water reducing agent comprising at least one phosphonic amino-alkylene group is advantageously as further detailed below.

Preferably, the content of water reducing agent comprising at least one phosphonic amino-alkylene group ranges from 0.01% to 5% by weight, preferentially from 0.05% to 4% by weight, more preferentially from 0.1% to 3% by weight of the total weight of the binder.

The weight ratio (water reducing agent comprising at least one phosphonic amino-alkylene group) / (cationic polymer) preferably ranges from 1 to 10, more preferably from 3 to 8.

The addition of cationic polymer to a concrete composition comprising a water reducing agent comprising at least one phosphonic amino-alkylene group allows to:

- reduce the dosage of water reducing agent to reach the initial slump flow target;
- reduce the setting time of the concrete composition.

In particular, the setting time of the mortar composition is less than 20 hours, the measurement being done according to the method described above.

Preferably, the slump flow value of the mortar composition is from 250 to 400 mm, preferably from 280 to 350 mm, the measurement being done according to the method described above.

In addition, the viscosity of the mortar composition is improved by the use of water reducing agent comprising at least one phosphonic amino-alkylene group.

Preferably, the flow time through a truncated viscosity measurement cone of the mortar composition at 5 min is less 25s, preferably less than 20s, more preferably less that 15s, the measurement being done according to the method described above.

Preferably, the setting time is suitable for the intended uses and the viscosity is lowered.

Furthermore, the mortar obtained after hardening has good mechanical properties, in particular in terms of compressive strength after 18 hours and after 24 hours, the measurement being done according to the method described above.

Preferably, the average compressive strength is greater than or equal to 4 MPa, preferably greater than or equal to 5 MPa, at 20 °C 24 hours after mixing.

For note, the chemical admixtures are available:

- in dried state, specifically flash dried;
- supported on inorganic particles; or
- dispersed in a solvent, preferably in water.

In the present disclosure, the content in chemical admixture always refers to the dry matter content of the active ingredient.

In the present invention, the chemical admixture may be supported on inorganic particles. The inorganic particles

are preferably made of an inorganic material suitable to support the chemical admixture, meaning that the material forming the inorganic particle is inert with regard to the chemical admixture.

In other terms, the inorganic material forming the inorganic particles is not likely to be attacked by the chemical admixture or to modify the chemical structure of the admixture.

Preferably, the particles used as support of the chemical admixture are particles based on silica or on alumina.

Silica-based particles comprise at least 50% of silica, preferably at least 80% of silica, and even more preferably at least 90% of silica, in % expressed by weight relative to the weight of inorganic particles.

The silica-based particles may contain precipitated silica, siliceous stone, or mixtures thereof. Precipitated silica is silica obtained by a precipitation reaction of a silicate, in particular an alkali metal silicate such as sodium silicate with an acid such as sulfuric acid. Siliceous stone may in particular be diatomite. Diatomite is a naturally occurring, soft, siliceous sedimentary rock that is usually crumbled into a fine white to off-white powder. It has a particle size ranging from less than 3 μm to more than 1 mm, typically from 10 to 200 μm. Diatomite typically comprises from 80 to 90% of silica, 2 to 4% of alumina and 0.5 to 2% of iron oxide, in % expressed by weight relative to the weight inorganic particles.

Clay inerting agent - cationic polymer

The first admixture is an inerting agent for clays, especially for swelling clays.

The clay inerting agent is a cationic polymer having a cationic charge density strictly greater than 0.5 meq/g, preferably greater than 1 meq/g and more preferably greater than 2 meq/g. The cationic polymer in the composition has preferably a cationic charge density less than 10.

The cationicity is measured at a pH strictly inferior to 7.

The cationic polymer in the composition has a molecular weight expressed by an intrinsic viscosity less than 1 dl/g, preferably less than 0.8 dl/g and more preferably less than 0.6 dl/g. The cationic polymer in the composition has preferably a molecular weight expressed by an intrinsic viscosity above 0,1.

Preferably, the cationic polymer is water-soluble.

The polymer can have a linear, comb or branched structure, preferably a linear structure or a comb structure.

The cationic polymer preferably comprises groups selected from phosphonium group, pyridinium group, sulphonium group, quaternary amine group and combination thereof. In particular quaternary amine groups are preferred. For note, the polymer can comprise tertiary amine groups or imine groups which are quaternized by protonation in an acidic medium, i.e. at a pH < 7. The cationic groups can be located on the main chain or on the side groups of the polymer.

The cationic polymer is preferably a comb-polymer comprising polyoxyalkylenated groups as side groups.

The cationic polymer can be obtained directly by a known polymerization process, such as radical polymerization, polycondensation or polyaddition, post-synthetic modification of a polymer, as disclosed in WO2006/032785, WO2007/090948 and WO2011/107704. In the context of the modification of polymers by grafting, mention may be made of grafted natural polymers, for example cationic starches.

Specifically, the polymer can be obtained by polymerisation of monomers including cationic monomers, their precursors, and their combination.

Cationic monomers are preferably selected from diallyldialkylammonium salts, quaternized dialkylaminoalkyl (meth)acrylates, (meth)acrylamides N-substituted by a quaternized dialkylaminoalkyl, and their combinations.

Suitable precursors of cationic monomers are specifically monomers carrying amine or imine groups. The nitrogen can be quaternized after polymerization in a known way as disclosed in WO2006/032785, WO2007/090948 and WO2011/107704.

The polymerization can further be carried out with non-ionic monomers, preferably comprising a short chain, more preferably comprising from 2 to 6 carbon atoms. Preferably, non-ionic monomer is selected from methoxypolyethylene glycol (meth)acrylate, acrylamide, N-vinylpyrrolidone, hydroxyethyl (meth)acrylate, N-vinyl-N-methylacetamide, alkyl (meth)acrylates and combination thereof. Anionic monomers can also be present, provided that the polymer finally obtained remains cationic overall.

Specific examples of cationic polymers are:

- polyvinylamines. The quaternized polyvinylamines can be prepared as described in Patent US 5,292,441;
- polymers of the polyethyleneimine type are also appropriate. The latter are quaternized by protonation;
- polymers obtained by polycondensation of epichlorohydrin with a mono- or dialkylamine, in particular methylamine or dimethylamine. Their preparation has been described, for example, in Patents US 3,738,945 and US 3,725,312. The unit of the cationic polymer obtained by polycondensation of dimethylamine and epichlorohydrin can be represented as follows:

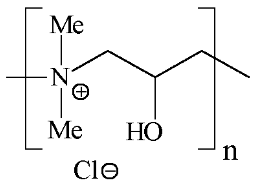
(I)

- polymers of the polyacrylamide type modified by Mannich reaction, for example polyacrylamide N-substituted by a dimethylaminomethyl group;
- polymers obtained by polycondensation of dicyandiamide and formaldehyde. These polymers and their process of preparation are described in Patent FR 1 042 084;
- polymers by condensation of dicyandiamide with formaldehyde in the presence of:

  A) a polyalkylene glycol; and/or
  B) a polyalkoxylated polycarboxylate, also known as PPC; and/or
  C) an ammonium derivative.

The polymers obtained by condensation of dicyandiamide with formaldehyde, optionally in the presence of other compounds, in particular of a polyalkylene glycol (A), of a polyalkoxylated polycarboxylate (B) and/or of a quaternization agent (C) are advantageously prepared as disclosed in WO2006/032785, page 6, line 21 to page 7, line 11 et page 8, lines 10 to 14, and page 9 lines 14-15, and page 10, line 3 to page 11, line 6, herein included by reference.
The polyalkylene glycol (compound A) is preferably a compound of formula (III):

$$R_7\text{-O-}[R_6\text{-O}]_n\text{-}R_8 \qquad \text{(III)}$$

in which:

$R_6$ is a $C_1$-$C_4$ alkyl group, preferably an ethyl and/or propyl group;
$R_7$ and $R_8$ are, independently of one another, a hydrogen atom or a $C_1$-$C_4$ alkyl group, preferably a methyl group; and
n is a number from 25 to 1 000.

By way of example, it can be polyethylene glycol, polypropylene glycol, an ethylene oxide/propylene oxide copolymer or a mixture of these different compounds. Preferably, it is polyethylene glycol.
The molecular weight, Mw, of compound A is preferably from 1 000 to 35 000 g/mol.
The polyalkoxylated polycarboxylate (compound B) is a comb polymer which comprises a main hydrocarbon chain to which both lateral carboxylic groups and alkoxylated groups are connected, in particular groups of propylene oxide (PO), ethylene oxide groups (EO) and/or combinations thereof. The lateral groups may be ionic or non-ionic. It is preferably a compound having the following formula (II):

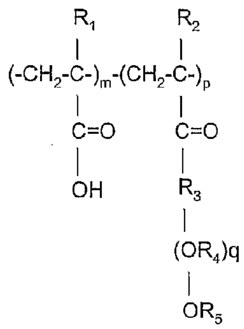
(II)

where

$R_1$ and $R_2$ are, independently of each other, a hydrogen atom or a methyl group;
$R_3$ and $R_4$ are, independently of each other, an $C_1$-$C_4$ alkylene group, preferably an ethylene or propylene group or one of the combinations thereof;
$R_5$ is a hydrogen atom or an $C_1$-$C_4$alkyl group preferably a methyl group;

m is a whole number from 2 to 100;
p is a whole number from 2 to 100; and
q is a whole number from 2 to 100.

The level of ester of the compound B, given by the ratio p/(m+p), may be from 10 to 60% and in particular from 20 to 40%.

The ammonium derivative (compound C) has as main role that of increasing the ionic nature of the polymer by introducing cationic functional groups. The ionic nature of the polymer contributes greatly to its solubility in water and to its affinity for clays, especially for swelling clays.

Preferably, the ammonium ion of the ammonium derivative is of following formula (IV):

$$NH(R_9)_3^+ \qquad (IV)$$

in which: the $R_9$ groups are identical or different and correspond to H or to a $C_1$-$C_6$ alkyl group.

Mention may be made, as examples of appropriate ammonium derivatives, of ammonium halides, for example ammonium chloride, ammonium bromide and ammonium iodide, ammonium sulphate, ammonium acetate, ammonium formate, ammonium nitrate or ammonium phosphate, ammonium formate being preferred.

Polymers obtained by polycondensation of epichlorohydrin with a mono- or dialkylamine are particularly preferred.

Water reducing agent comprising at least one phosphonic amino-alkylene group

Examples of the water reducing agent comprising at least one phosphonic amino-alkylene group can be found in the patent EP0663892 or in WO2011/015781. They are compounds comprising a phosphonic amino-alkylene group and preferably a poly oxyalkylene chain. They are preferably diphosphonate compounds.

The water reducing agent advantageously corresponds to compounds having following Formula (1):

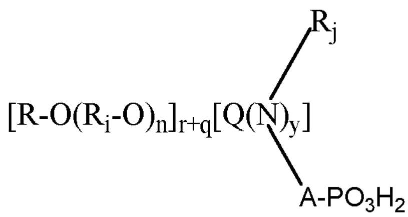

(1)

in which:

- R is a hydrogen atom or a monovalent hydrocarbon group with 1 to 18 carbon atoms and optionally one or more hetero atoms;
- the $R_i$ are similar or different and represent an alkylene for example ethylene, propylene, amylene, octylene or cyclohexene or an arylene, for example styrene or methylstyrene, the $R_i$ optionally comprising one or more hetero atoms;
- Q is a hydrocarbon group with 2 to 18 carbon atoms and optionally one or more hetero atoms;
- A is an alkylidene group with 1 to 5 carbon atoms;
- the $R_j$ are similar or different and may be selected from:

  *the $A$-$PO_3H_2$ group, A having the aforesaid meaning;
  *an alkyl group with 1 to 18 carbon atoms and being able to carry [R-O($R_i$-O)$_n$] groups, R and $R_i$ having the aforesaid meanings;
  *and the group:

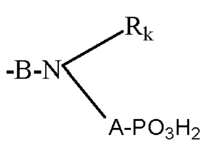

  - $R_k$ designating a group such as $R_j$;
  - B designating an alkylene group carrying 2 to18 carbon atoms;

- "n" is a number greater than or equal to 0;
- "r" is the sum of the [R-O($R_i$-O)$_n$] groups carried by all the $R_j$;
- "q" is the number of [R-O($R_i$-O)$_n$] groups carried by Q;
- the sum "r+q" is from 1 to 10;
- "y" is an integer from 1 to 3;
- Q, N and the $R_j$ can form together one or more cycles, this or these cycles further being able to contain one or more other hetero atoms.

For avoidance of doubts, N stands for nitrogen.

The compounds or the salts of the compounds according to Formula (1) may be used. The salts of the compounds according to formula (1) may be stœchiometric or not, mixed or not, and are constituted with alkali metals, alkali earth metals, amines or quaternary ammoniums.

An example of a process for preparation of the compounds of Formula (1) is described in European Patent Application 0 663 892, page 9, line 10 to page 12, line 13, herein incorporated by reference.

Preferably compounds of Formula (1) satisfy one or many of the following recited definitions:

- R is a hydrogen atom, a methyl group, an ethyl group or a nonylphenol group. More preferably, R is a hydrogen atom;
- $R_i$ groups are selected from ethylene and propylene. Preferably, all $R_i$ groups are ethylene. When the majority or all of the $R_i$ groups are ethylene, the water-soluble or water-dispersing character of the compounds is increased;
- the Q group comprises 2 to12 carbon atoms, and preferably 2 to 6 carbon atoms.

Advantageously, Q is selected from ethylene, cyclo-hexene or n-hexene;

- alkylidene A group carries 1 to 3 carbon atoms. Preferably A is methylene group;
- $R_j$ group, which is optionally in salt form, is selected from the $-CH_2-PO_3H_2$, methyl and $C_2H_4N(CH_2PO_3H_2)_2$ groups. Preferably $R_j$ represents the $-CH_2-PO_3H_2$ group;
- "n" ranges from 1 to 10 000, preferably from 1 to 500, more preferably from 1 to 250;
- sum "r + q" corresponds to the total number of polyoxyalkyl chains. Preferably this sum is less than 3. More preferably it is equal to 1.

The following compound of formula (2) is particularly preferred:

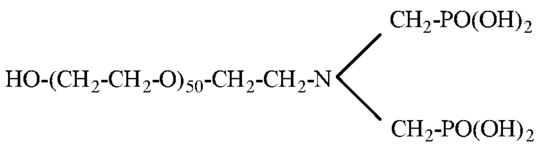
(2)

When they are in the state of salt, the compounds according to Formula (1) are preferably sodium, calcium or diethanolamine salts.

In another embodiment, the water reducing agent advantageously corresponds to compounds having following Formula (3):

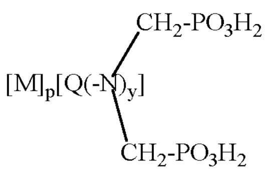
(3)

in which:

- M is a linear or branched hydrocarbon group (optionally in dendrimers) optionally comprising one or more hetero atoms (O, N, S); optionally of different natures;
- Q is a hydrocarbon group with 2 to 18 carbon atoms and optionally one or more hetero atoms;
- "p" is the number of groups [M] carried by Q, p ranges from 1 to 10; and
- "y" is an integer ranging from 1 to 3.

For avoidance of doubts, N stands for nitrogen.

The M group may be identical or different. Preferably, the M group does not comprise a phosphate group. Each M group may have a molar mass greater than 400 g/mol. The total molar mass of all the M groups of a same molecule is preferably comprised from 1 000 to 10 000 g/mol.

Preferably, the number p is less than twice the number y. Preferably p ranges from 1 to 5.

Preferably the Q group comprises 2 to 12 carbon atoms, and preferably 2 to 6 carbon atoms. Advantageously, Q is selected from ethylene, cyclo-hexene or n-hexene.

In addition to the above described chemical admixtures, the concrete composition or the premix may further comprise a water reducing agent which does not comprise phosphonic amino-alkylene group. The concrete composition or the premix may comprise from 0.01 to 2% by weight, compared to the total weight of the binder, of water reducing agent which does not comprise phosphonic amino-alkylene group.

The water reducing agents include, for example lignosulfonates, hydroxycarboxylic acids, carbohydrates and other specialized organic compounds, e.g. glycerol, polyvinyl alcohol, sodium alumino-methyl-siliconate, sulfanilic acid and casein as well as superplasticizers. Superplasticizers can be selected from sulfonated condensates of naphthalene formaldehyde (generally a sodium salt), sulfonate condensates of melamine formaldehyde, modified lignosulfonates, polycarboxylates, e.g. polyacrylates (generally sodium salt), polycarboxylate ethers, copolymers containing a polyethylene glycol grafted on a polycarboxylate, sodium polycarboxylates-polysulfonates, and combinations thereof. In order to reduce the total amount of alkaline salts, the superplasticizer may be used as a calcium salt rather than as a sodium salt.

Mixing

Mixing can be done by any known methods.

Preferably, the binder is prepared during a first step, and the aggregates and water are added during a subsequent step.

Calcium sulphate, if any, is added during the first step.

Chemical admixtures can be added during the first step if they are in a dried state or supported on inorganic particles. Liquid chemical admixtures are added during the subsequent step.

In an embodiment, a pre-mix comprising the binder, the admixtures and optionally the calcium sulphate is first prepared. In that embodiment, admixtures are in a dried state, preferably flash dried, or supported on inorganic particles.

In a variant, that pre-mix can be mixed with aggregates and water.

In a variant, that pre-mix can be mixed with aggregates and the resulting mix can be mixed with water later. That resulting mix is a dry ready-mix concrete, usable by simply mixing with water.

In all embodiments, the mixing is done using a conventional mixer at a concrete mixing plant or directly in a drum-truck mixer, for a mixing time usual in the field.

The concrete composition of the invention may be cast to produce, after hydration and hardening a cast article for the construction field. Such cast articles, that comprise the concrete composition of the invention, also constitute an object of the invention. Cast articles for the construction field include, for example, a slab, a floor, a screed, a foundation, a wall, a partition wall, a beam, a work top, a pillar, a bridge pier, a masonry block of concrete, optionally foamed concrete, a pipe, a conduit, a post, a stair, a panel, a cornice, a mold, a road system component (for example a border of a pavement), a roof tile, a surfacing (for example of a road), a jointing plaster (for example for a wall) and an insulating component (acoustic and/or thermal).

The invention makes it possible to respond to the need to reduce $CO_2$ emissions while having concrete composition whose rheology at fresh state is improved. Low carbon concrete compositions, because of their specific binder composition, tend to be sticky and do not flow easily. The admixtures used in this invention have been found to remedy this problem.

Also, water-reducing additive comprising at least one phosphonic amino-alkylene group have been used as water reducers since a long period of time. The resulting concrete compositions have excellent rheological properties, but usually tend to have long setting strength and low early strength. The admixture composition of the present invention was surprisingly found to advantageously provide short setting times.

The invention is also directed to the use of a cationic polymer as defined above to reduce the setting time of a concrete composition comprising:

- a hydraulic binder, wherein the hydraulic binder comprises Portland clinker mineral addition selected from the group consisting of limestone, fly ash or combination thereof, the limestone and/or fly ash representing at least 50% by weight of the total weight of the binder, as defined above;
- water-reducing additive comprising at least one phosphonic amino-alkylene group as defined above.

The following examples illustrate the invention without limiting it.

**Examples:**

Raw materials:

**Cement SPLC:** CEM I 52,5N produced at the cement plant of Saint Pierre la Cour was used. This cement composition according to the cement standards EN 197-1 of April 2012 contains less than 5 wt.-% of minor constituents, less than 5 wt.-% gypsum, and Portland clinker.
**Cement KUJAWY:** CEM I 42,5R produced at the cement plant of KUJAWY was used. This cement composition according to the cement standards EN 197-1 of April 2012 contains less than 5 wt.-% of minor constituents, less than 5 wt.-% gypsum, and Portland clinker. **Coarse limestone filler:** limestone filler supplied by Omya, produced at the plant of Saint Béat. D50=23microns
**Fine limestone filler:** fine B6tocarb F-OM supplied by Omya. D50=3microns
**FA:** Fly Ash "ProAsh" from Janikowo D50=43microns
**SF:** Silica Fume SILIMIK supplied by Huta Laziska SA. D50=0,15microns
**Phosphonate type polymer:** commercial diphosphonate based water reducer provided by Chryso under the commercial name Chryso Optima 100.
**PCE:** commercial polycarboxylate ether based water reducer provided by BASF Construction Chemicals under the commercial name BASF Glenium 27. BASF Glenium 27 has a solid content of: 20.7 %-wt.
**PAE:** commercial poly aryl ether based admixture provided by BASF Construction Chemicals under the commercial name BASF MasterEase 3000. BASF MasterEase 3000 has a solid content of: 26,2%, expressed in weight.
**Cationic polymer:** cationic polymer provided by SNF, polycondensate of epichlorohydrin and dimethylamine, having a cationic charge density of 7.3 meq/g and an intrinsic viscosity of 0.04 dl/g under the commercial name FL2250. FL2250 has a solid content of: 55 %-wt.
**Normalised Sand: 0-4 mm:** sand compliant with the requirements of standard EN 196-1 (September 2016)
**Aggregates:** aggregates compliant the requirements of standard FR EN 12620 (June 2008). Sand 0/1 (0-1 mm) La Sablière CCSH. Sand 0/4SCL (0-4 mm) from La Petite Craz quarry. Gravel 5/10R (5-10 mm, rolled) & 10/20R (10-20 mm, rolled) from Saint Bonnet quarry

**Example 1: Hydraulic binder comprising limestone**

Mortar composition:

In all of the tests below, the following components are used in the amounts provided in the table below.

Table 1

| | Cement SPLC | Coarse Limestone filler | Fine limestone filler | Normalised sand |
|---|---|---|---|---|
| Density | 3.12 | 2.72 | 2.74 | 2.63 |
| Amount (g) | 208.4 | 535 | 126 | 1350 |
| Binder weight percentage | 24.0 | 61.5 | 14.5 | - |

The mortars are prepared taking into account the amount of water absorbed by the sand, and the amount of water added by the liquid admixtures. In all tests, normalized sand has a sand humidity of 0% and absorbs water in an amount of 0.42 wt.-% of its weight. In all tests, the content of chemical admixture, if any, is expressed in % in weight of solid content in liquid admixture compared to total weight of the binder.
The composition of the mortars is described in the following table.

Table 2

| Test nb. | Chemical admixture<br>Type (content) | Total water (g) | Efficient water / Binder |
|---|---|---|---|
| REF1 | PCE (0.19 %) | 200.7 | 0.22 |
| COMPAR1 | PCE (0.14%) + cationic polymer (0.05%) | 201.1 | 0.22 |
| REF2 | PAE (0.24%) | 200.5 | 0.22 |

(continued)

| Test nb. | Chemical admixture<br>Type (content) | Total water (g) | Efficient water / Binder |
|---|---|---|---|
| COMPAR2 | PAE (0.19%) + cationic polymer (0.05%) | 200.8 | 0.22 |
| REF3 | Phosphonate type polymer 100 (0.33%) | 199.8 | 0.22 |
| REF4 | Cationic polymer (0.05%) | 202.1 | 0.22 |
| INV | Phosphonate type polymer (0.23%) + cationic polymer (0.05%) | 200.5 | 0.22 |

REF1, REF2 and REF3 are reference mortar compositions comprising one chemical admixture, which is a water reducing agent. REF1, REF2 and REF3 do not comprise cationic polymer.

REF4 is reference mortar composition comprising one chemical admixture, which is a cationic polymer. REF4 composition does not comprise water reducing agent.

COMPAR1 and COMPAR2 are comparative mortar compositions comprising two chemical admixtures: a cationic polymer and a water reducing agent. In these comparative compositions, the water reducing agent does not comprise phosphonic amino-alkylene group.

INV is mortar composition according to the invention comprising two chemical admixtures: a cationic polymer and a water reducing agent. In this composition according to the invention, the water reducing agent comprises phosphonic amino-alkylene group.

The rheology, compressive strength and setting time of the mortar compositions are measured. All tests are carried out at 20°C.

The results are provided in the table below and in figures 1, 2 and 3.

Table 3

| Test no. | Slump Flow (mm) | | O-Funnel (seconds) | | Compressive strength (MPa) | |
|---|---|---|---|---|---|---|
| | @5 min | @15 min | @5 min | @15 min | @18 hours | @24 hours |
| REF1 | 325 | 315 | 22 | 26 | 7.9 | 10.6 |
| COMPAR1 | 310 | 295 | 29 | 41 | 8.4 | 10.9 |
| REF2 | 270 | 295 | 28 | 27 | 5.6 | 8.7 |
| COMPAR2 | 265 | 300 | 22 | 21 | 5.6 | 9.4 |
| REF3 | 315 | 310 | 12 | 13 | 1.0 | 5.3 |
| REF4 | n.m. | n.m. | n.m. | n.m. | n.d. | n.d. |
| INV | 295 | 300 | 12 | 13 | 4.2 | 8.2 |

n.m.: not measurable. The concrete composition forms a bloc so quickly that slump flow and viscosity cannot be measured.

n.d.: in view of the rheology which cannot be measured, compressive strength has not been determined.

Results in table 3 demonstrates that for all mortar compositions comprising a water-reducing agent, the addition of a cationic polymer improves the slump flow of the concrete composition while the water-reducing agent content can be reduced. The use of water reducing agent comprising phosphonic amino-alkylene group improves viscosity of the concrete composition.

The measured temperature as a function of time is a good indicator of the setting time of the mortar as it refers to the dissolution of anhydrous that immediately convert into hydrates.

Figure 1 shows that the addition of a cationic polymer to a mortar composition comprising a PCE water-reducing agent is suitable to reduce the dosage of PCE water-reducing agent to reach the initial slump flow target (from 0.19 wt.% to 0.14 wt.%) but this has no significant impact on the setting times: the recorded maximum temperature is recorded at around 11 hours in both cases.

Figure 2 shows that the addition of a cationic polymer to a mortar composition comprising a PAE water-reducing agent is suitable to reduce the dosage of PAE water-reducing agent to reach the initial slump flow target (from 0.24 wt.% to 0.19 wt.%) but this has no significant impact on the setting times: the recorded maximum temperature is recorded at around 15 hours in both cases.

Figure 3 shows that the addition of a cationic polymer to a mortar composition comprising a water-reducing agent

comprising at least one phosphonic amino-alkylene group is suitable to reduce the dosage of water-reducing agent comprising at least one phosphonic amino-alkylene group to reach the initial slump flow target (from 0.33 wt.% to 0.23 wt.%).

In the same time, it strongly reduces the setting time: the recorded maximum temperature occurs at about 25 hours for REF3 and is reduced to about 15 hours when a small amount of a cationic polymer is added. Finally, the addition of a cationic polymer has no significant impact on the viscosity of the mortar that remains extremely low.

Thus, the mortar of the invention has a suitable setting time and a low viscosity.

**Example 2: Hydraulic binder comprising fly ash**

Concrete composition:

The following components are used in the amounts provided in the table below.

Table 4

| | Mix1 | Mix2 |
|---|---|---|
| CEMENT KUJAWY | 98 | 124 |
| FA | 299 | 273 |
| SF | 15 | 5 |
| Efficient Water | 141,5 | 149,7 |
| Phosphonate type polymer | 3,9 | 3,5 |
| PCE | 1,4 | 1,1 |
| Cationic polymer | 1,3 | 0,4 |
| 0/1 | 131 | 131 |
| 0/4SCL | 530 | 529 |
| 5/10R | 264 | 264 |
| 10/20R | 806 | 804 |

The rheology, compressive strength and setting time of the concrete compositions are measured. All tests are carried out at 20°C.

The results are provided in the table below:

Table 5

| Test no. | Slump Flow (mm) | | Viscosity - Reverse Abrams | | Compressive strength (MPa) | |
|---|---|---|---|---|---|---|
| | @5 min | @90 min | @5 min | @90 min | @24 hours | @28d |
| Mix1 | 610 | 570 | 5.3 | 7.1 | 1.4 | 35.1 |
| Mix2 | 550 | 390 | 3.3 | 4.7 | 3.4 | 30.7 |

**Claims**

**1.** Concrete composition comprising:

- a hydraulic binder, wherein the hydraulic binder comprises Portland clinker and mineral addition selected from the group consisting of limestone, fly ash or combination thereof, the limestone and/or fly ash representing at least 50% by weight of the total weight of the binder;
- a cationic polymer having a cationic charge density greater than 0.5 meq/g, preferably greater than 1.0 meq/g, and an intrinsic viscosity less than 1 dl/g;
- a water-reducing additive comprising at least one phosphonic amino-alkylene group;
- aggregates, and

- water.

2. Concrete composition according to claim 1, wherein the limestone and/or fly ash represents at least 60% by weight of the total weight of the binder.

3. Concrete composition according to any one of the preceding claims, wherein limestone is in the form of particles having a Dv90 less than or equal to 200 μm, and preferably a Dv97 less than or equal to 200 μm.

4. Concrete composition according to any one of the preceding claims, wherein limestone is in the form of particles and is composed of:

   - a fraction of coarse particles having a D50 comprised between 10 and 30 μm; and
   - a fraction of fine particles having a D50 comprised between 1 and 6 μm.

5. Concrete composition according to any one of the preceding claims, wherein fly ash is in the form of particles having a Dv50 comprised between 30 to 60 μm.

6. Concrete composition according to any one of the preceding claims, wherein the hydraulic binder comprises up to 15% by weight, compared to the total weight of the binder, of additional mineral component, such as slag, calcined clay, silica fume and combinations thereof.

7. Concrete composition according to any one of the preceding claims, wherein the water to binder ratio is comprised between 0.18 and 0.30, preferentially between 0.20 and 0.25.

8. Concrete composition according to any one of the preceding claims, wherein the cationic polymer comprises cationic groups selected from the group comprising phosphonium group, pyridinium group, sulphonium group, quaternary amine group and combination thereof.

9. Concrete composition according to any one of the preceding claims, wherein the cationic polymer is obtained by polycondensation of epichlorohydrin with a mono-or dialkylamine, in particular methylamine or dimethylamine.

10. Concrete composition according to any one of the preceding claims, wherein the cationic polymer content ranges from 0.0001% to 1% by weight, preferentially from 0.001% to 0.5% by weight, more preferentially from 0.01% to 0.1% by weight of the total weight of the binder.

11. Concrete composition according to any one of the preceding claims, wherein the water-reducing additive comprising at least one phosphonic amino-alkylene group further comprises a poly oxyalkyl chain.

12. Concrete composition according to any one of the preceding claims, wherein the water-reducing additive comprising at least one phosphonic amino-alkylene group corresponds to compound having the formula (1):

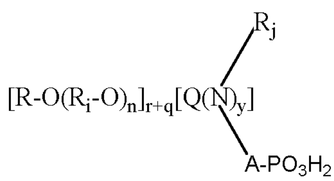
(1)

in which:

   - R is a hydrogen atom or a monovalent hydrocarbon group with 1 to 18 carbon atoms and optionally one or more hetero atoms;
   - the $R_i$ are similar or different and represent an alkylene for example ethylene, propylene, amylene, octylene or cyclohexene or an arylene, for example styrene or methylstyrene, the $R_i$ optionally comprising one or more hetero atoms;
   - Q is a hydrocarbon group with 2 to 18 carbon atoms and optionally one or more hetero atoms;
   - A is an alkylidene group with 1 to 5 carbon atoms;
   - the $R_j$ are similar or different and may be selected from:

*the $A\text{-}PO_3H_2$ group, A having the aforesaid meaning;
*an alkyl group with 1 to 18 carbon atoms and being able to carry $[R\text{-}O(R_i\text{-}O)_n]$ groups, R and $R_i$ having the aforesaid meanings;
*and the group:

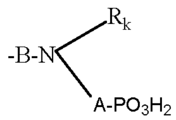

- $R_k$ designating a group such as $R_j$;
- B designating an alkylene group with 2 to18 carbon atoms;

- "n" is a number greater than or equal to 0;
- "r" is the sum of the $[R\text{-}O(R_i\text{-}O)_n]$ groups carried by all the $R_j$;
- "q" is the number of $[R\text{-}O(R_i\text{-}O)_n]$ groups carried by Q;
- the sum "r+q" is from 1 to 10;
- "y" is an integer from 1 to 3;
- Q, N and the $R_j$ can form together one or more cycles, this or these cycles further being able to contain one or more other hetero atoms.

**13.** Concrete composition according to any one of claims 1 to 9, wherein the water-reducing additive comprising at least one phosphonic amino-alkylene group corresponds to compound having the formula (3):

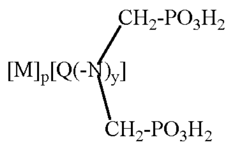
(3)

in which:

- M is a linear or branched hydrocarbon group optionally comprising one or more hetero atoms;
- Q is a hydrocarbon group with 2 to 18 carbon atoms and optionally one or more hetero atoms;
- "p" is the number of [M] groups carried by Q, p being from 1 to 10; and
- "y" is an integer from 1 to 3.

**14.** Concrete composition according to any one of the preceding claims, wherein the content of water reducing agent comprising at least one phosphonic amino-alkylene group ranges from 0.01% to 2% by weight, preferentially from 0.05% to 1% by weight, more preferentially from 0.1% to 0.5% by weight of the total weight of the binder.

**15.** Concrete composition according to any one of the preceding claims, wherein the weight ratio (water reducing agent comprising at least one phosphonic amino-alkylene group) / (cationic polymer) preferably ranges from 2 to 8, more preferably from 3 to 6.

**16.** Pre-mix comprising:

- a hydraulic binder, as defined in any one of the preceding claims;
- a cationic polymer as defined in any one of the preceding claims; and
- water-reducing additive comprising at least one phosphonic amino-alkylene group as defined in any one of the preceding claims.

**17.** A process for preparing concrete composition, comprising mixing of:

- the hydraulic binder as defined in any one of the preceding claims,
- the cationic polymer as defined in any one of the preceding claims,
- the water-reducing additive comprising at least one phosphonic amino-alkylene group as defined in any one of

the preceding claims,
- water,
- aggregates.

**18.** A hardened concrete object based on the concrete composition as defined in any one of claims 1 to 15.

**19.** Use of a cationic polymer as defined in any one of the preceding claims to reduce the setting time of a concrete composition comprising:

- a hydraulic binder, wherein the hydraulic binder comprises Portland clinker and mineral addition selected from the group consisting of limestone, fly ash or combination thereof, the limestone and/or fly ash representing at least 50% by weight of the total weight of the binder, as defined in any one of the preceding claims;
- water-reducing additive comprising at least one phosphonic amino-alkylene group as defined in any one of the preceding claims.

**Patentansprüche**

**1.** Betonzusammensetzung, umfassend:

- ein hydraulisches Bindemittel, wobei das hydraulische Bindemittel Portlandklinker und mineralischen Zusatz umfasst, der ausgewählt ist aus der Gruppe, die besteht aus Kalkstein, Flugasche oder einer Kombination davon, wobei der Kalkstein und/oder die Flugasche mindestens 50 Gew.-% des Gesamtgewichts des Bindemittels ausmacht bzw. ausmachen;
- ein kationisches Polymer mit einer kationischen Ladungsdichte von höher als 0,5 meq/g, vorzugsweise höher als 1,0 meq/g, und einer Grenzviskosität von niedriger als 1 dl/g;
- ein wasserreduzierendes Additiv, das mindestens eine phosphonische Aminoalkylengruppe umfasst;
- Aggregate, und
- Wasser.

**2.** Betonzusammensetzung nach Anspruch 1, wobei der Kalkstein und/oder die Flugasche mindestens 60 Gew.-% des Gesamtgewichts des Bindemittels ausmacht bzw. ausmachen.

**3.** Betonzusammensetzung nach einem der vorhergehenden Ansprüche, wobei Kalkstein in der Form von Partikeln vorliegt, die eine Dv90 von kleiner oder gleich 200 μm und vorzugsweise eine Dv97 von kleiner oder gleich 200 μm aufweisen.

**4.** Betonzusammensetzung nach einem der vorhergehenden Ansprüche, wobei Kalkstein in der Form von Partikeln vorliegt und besteht aus:

- einer Fraktion von groben Partikeln, die eine D50 von zwischen 10 und 30 μm aufweisen; und
- einer Fraktion von feinen Partikeln, die eine D50 von zwischen 1 und 6 μm aufweisen.

**5.** Betonzusammensetzung nach einem der vorhergehenden Ansprüche, wobei Flugasche in der Form von Partikeln vorliegt, die eine Dv50 von zwischen 30 und 60 μm aufweisen.

**6.** Betonzusammensetzung nach einem der vorhergehenden Ansprüche, wobei das hydraulische Bindemittel, bezogen auf das Gesamtgewicht des Bindemittels, bis zu 15 Gew-% einer zusätzlichen mineralischen Komponente, wie beispielsweise Schlacke, kalziniertem Ton, Silicastaub und Kombinationen davon, umfasst.

**7.** Betonzusammensetzung nach einem der vorhergehenden Ansprüche, wobei das Verhältnis von Wasser zu Bindemittel zwischen 0,18 und 0,30, vorzugsweise zwischen 0,20 und 0,25, beträgt.

**8.** Betonzusammensetzung nach einem der vorhergehenden Ansprüche, wobei das kationische Polymer kationische Gruppen umfasst, die ausgewählt sind aus der Gruppe, die eine Phosphoniumgruppe, eine Pyridiniumgruppe, eine Sulfoniumgruppe, eine quaternäre Amingruppe und eine Kombination davon umfasst.

**9.** Betonzusammensetzung nach einem der vorhergehenden Ansprüche, wobei das kationische Polymer durch

Polykondensation von Epichlorhydrin mit einem Mono- oder Dialkylamin, insbesondere Methylamin oder Dimethylamin, erhalten wird.

**10.** Betonzusammensetzung nach einem der vorhergehenden Ansprüche, wobei der Gehalt an kationischem Polymer im Bereich von 0,0001 bis 1 Gew.-%, vorzugsweise von 0,001 bis 0,5 Gew.-%, noch bevorzugter von 0,01 bis 0,1 Gew.-%, bezogen auf das Gesamtgewicht des Bindemittels, liegt.

**11.** Betonzusammensetzung nach einem der vorhergehenden Ansprüche, wobei das wasserreduzierende Additiv, das mindestens eine phosphonische Aminoalkylengruppe umfasst, ferner eine Polyoxyalkylkette umfasst.

**12.** Betonzusammensetzung nach einem der vorhergehenden Ansprüche, wobei das wasserreduzierende Additiv, das mindestens eine phosphonische Aminoalkylengruppe umfasst, der Verbindung mit der Formel (1) entspricht:

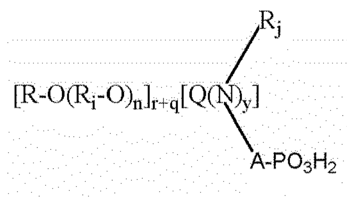
(1)

in der:

- R ein Wasserstoffatom oder eine einwertige Kohlenwasserstoffgruppe mit 1 bis 18 Kohlenstoffatomen und wahlweise einem oder mehreren Heteroatomen ist;
- die $R_i$ gleich oder unterschiedlich sind und ein Alkylen, zum Beispiel Ethylen, Propylen, Amylen, Octylen oder Cyclohexen, oder ein Arylen, zum Beispiel Styrol oder Methylstyrol, darstellen, wobei die $R_i$ wahlweise ein oder mehrere Heteroatome umfassen;
- Q eine Kohlenwasserstoffgruppe mit 2 bis 18 Kohlenstoffatomen und wahlweise einem oder mehreren Heteroatomen ist;
- A eine Alkylidengruppe mit 1 bis 5 Kohlenstoffatomen ist;
- die $R_j$ gleich oder unterschiedlich sind und ausgewählt werden können aus:

  *der Gruppe $A\text{-}PO_3H_2$, wobei A die vorhergehend genannte Bedeutung aufweist;
  *einer Alkylgruppe mit 1 bis 18 Kohlenstoffatomen, die $[R\text{-}O(R_i\text{-}O)_n]$-Gruppen tragen kann, wobei R und $R_i$ die vorhergehend genannten Bedeutungen aufweisen;
  *und der Gruppe:

  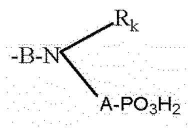

  - wobei $R_k$ eine Gruppe wie beispielsweise $R_j$ bezeichnet;
  - wobei B eine Alkylengruppe mit 2 bis 18 Kohlenstoffatomen bezeichnet;

- "n" eine Zahl größer oder gleich 0 ist;
- "r" die Summe der $[R\text{-}O(R_i\text{-}O)_n]$-Gruppen ist, die von allen $R_j$ getragen werden;
- "q" die Anzahl von $[R\text{-}O(R_i\text{-}O)_n]$-Gruppen ist, die von Q getragen werden;
- die Summe "r+q" von 1 bis 10 beträgt;
- "y" eine ganze Zahl von 1 bis 3 ist;
- Q, N und $R_j$ zusammen einen oder mehrere Zyklen bilden können, wobei dieser oder diese Zyklen ferner ein oder mehrere andere Heteroatome enthalten kann bzw. können.

**13.** Betonzusammensetzung nach einem der Ansprüche 1 bis 9, wobei das wasserreduzierende Additiv, das mindestens eine phosphonische Aminoalkylengruppe umfasst, der Verbindung mit der Formel (3) entspricht:

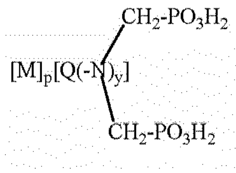 (3)

in der:

- M eine lineare oder verzweigte Kohlenwasserstoffgruppe ist, die wahlweise ein oder mehrere Heteroatome umfasst;
- Q eine Kohlenwasserstoffgruppe mit 2 bis 18 Kohlenstoffatomen und wahlweise einem oder mehreren Heteroatomen ist;
- "p" die Anzahl der von Q getragenen [M]-Gruppen ist, wobei p 1 bis 10 beträgt; und
- "y" eine ganze Zahl von 1 bis 3 ist.

**14.** Betonzusammensetzung nach einem der vorhergehenden Ansprüche, wobei der Gehalt an wasserreduzierendem Mittel, das mindestens eine phosphonische Aminoalkylengruppe umfasst, im Bereich von 0,01 bis 2 Gew.-%, vorzugsweise von 0,05 bis 1 Gew.-%, noch bevorzugter von 0,1 bis 0,5 Gew.-%, bezogen auf das Gesamtgewicht des Bindemittels liegt.

**15.** Betonzusammensetzung nach einem der vorhergehenden Ansprüche, wobei das Gewichtsverhältnis (wasserreduzierendes Mittel, das mindestens eine phosphonische Aminoalkylengruppe umfasst)/(kationisches Polymer) vorzugsweise im Bereich von 2 bis 8, noch bevorzugter von 3 bis 6, liegt.

**16.** Vormischung umfassend:

- ein hydraulisches Bindemittel nach einem der vorhergehenden Ansprüche;
- ein kationisches Polymer nach einem der vorhergehenden Ansprüche; und
- ein wasserreduzierendes Additiv, das mindestens eine phosphonische Aminoalkylengruppe nach einem der vorhergehenden Ansprüche umfasst.

**17.** Verfahren zur Herstellung einer Betonzusammensetzung, umfassend das Mischen von:

- dem hydraulischen Bindemittel nach einem der vorhergehenden Ansprüche,
- dem kationischen Polymer nach einem der vorhergehenden Ansprüche,
- dem wasserreduzierenden Additiv, das mindestens eine phosphonische Aminoalkylengruppe nach einem der vorhergehenden Ansprüche umfasst,
- Wasser,
- Aggregaten.

**18.** Festbetongegenstand auf Basis der Betonzusammensetzung nach einem der Ansprüche 1 bis 15.

**19.** Verwendung eines kationischen Polymers nach einem der vorhergehenden Ansprüche zur Verkürzung der Abbindezeit einer Betonzusammensetzung, umfassend:

- ein hydraulisches Bindemittel, wobei das hydraulische Bindemittel Portlandklinker und einen mineralischen Zusatz, der ausgewählt aus der Gruppe, die besteht aus Kalkstein, Flugasche oder einer Kombination davon, umfasst, wobei der Kalkstein und/oder die Flugasche mindestens 50 Gew.-% des Gesamtgewichts des Bindemittels nach einem der vorhergehenden Ansprüche ausmacht bzw. ausmachen;
- wasserreduzierendes Additiv, das mindestens eine phosphonische Aminoalkylengruppe nach einem der vorhergehenden Ansprüche umfasst.

## Revendications

**1.** Composition de béton comprenant :

• un liant hydraulique, le liant hydraulique comprenant du clinker de Portland et une addition minérale sélectionnée parmi le groupe constitué de calcaire, de cendres volantes ou une combinaison de ceux-ci, le calcaire et/ou les cendres volantes représentant au moins 50 % en poids du poids total du liant;
• un polymère cationique ayant une densité de charge cationique supérieure à 0,5 meq/g, de préférence supérieure à 1,0 meq/g, et une viscosité intrinsèque inférieure à 1 dl/g;
• un additif réducteur d'eau comprenant au moins un groupe phosphonique amino-alcylénique ;
• des granulats, et
• de l'eau.

**2.** Composition de béton selon la revendication 1, dans laquelle le calcaire et/ou les cendres volantes représentent au moins 60 % en poids du poids total du liant.

**3.** Composition de béton selon l'une quelconque des revendications précédentes, dans laquelle le calcaire est sous forme de particules ayant un Dv90 inférieur ou égal à 200 μm, et de préférence un Dv97 inférieur ou égal à 200 μm.

**4.** Composition de béton selon l'une quelconque des revendications précédentes, dans laquelle le calcaire est sous forme de particules et est composé de :

• une fraction de particules grossières ayant un D50 compris entre 10 et 30 μm ; et
• une fraction de particules fines ayant un D50 compris entre 1 et 6 μm.

**5.** Composition de béton selon l'une quelconque des revendications précédentes, dans laquelle les cendres volantes sont sous forme de particules ayant un Dv50 compris entre 30 et 60 μm.

**6.** Composition de béton selon l'une quelconque des revendications précédentes, dans laquelle le liant hydraulique comprend jusqu'à 15 % en poids, par rapport au poids total du liant, d'un composant minéral supplémentaire, tel que des laitiers, de l'argile calcinée, de la fumée de silice et des combinaisons de ceux-ci.

**7.** Composition de béton selon l'une quelconque des revendications précédentes, dans laquelle le rapport eau/liant est compris entre 0,18 et 0,30, de préférence entre 0,20 et 0,25.

**8.** Composition de béton selon l'une quelconque des revendications précédentes, dans laquelle le polymère cationique comprend des groupes cationiques sélectionnés parmi le groupe comprenant le groupe phosphonium, le groupe pyridinium, le groupe sulfonium, le groupe amine quaternaire et leurs combinaisons.

**9.** Composition de béton selon l'une quelconque des revendications précédentes, dans laquelle le polymère cationique est obtenu par polycondensation de l'épichlorhydrine avec une mono- ou dialkylamine, en particulier la méthylamine ou la diméthylamine.

**10.** Composition de béton selon l'une quelconque des revendications précédentes, dans laquelle la teneur en polymère cationique varie de 0,0001 % à 1 % en poids, de préférence de 0,001 % à 0,5 % en poids, plus préférentiellement de 0,01 % à 0,1 % en poids du poids total du liant.

**11.** Composition de béton selon l'une quelconque des revendications précédentes, dans laquelle l'additif réducteur d'eau comprenant au moins un groupe phosphonique amino-alcylénique comprend en outre une chaîne polyoxyalkyle.

**12.** Composition de béton selon l'une quelconque des revendications précédentes, dans laquelle l'additif réducteur d'eau comprenant au moins un groupe phosphonique amino-alcylénique correspond à un composé ayant la formule (1)

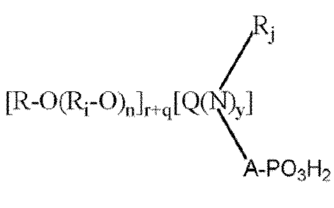
(1)

:

dans laquelle :

- R est un atome d'hydrogène ou un groupe hydrocarboné monovalent avec 1 à 18 atomes de carbone et éventuellement un ou plusieurs hétéroatomes ;
- les $R_i$ sont similaires ou différents et représentent un alcylène par exemple éthylène, propylène, amylène, octylène ou cyclohexène ou un arylène, par exemple styrène ou méthylstyrène, les $R_i$ comprenant éventuellement un ou plusieurs hétéroatomes ;
- Q est un groupe hydrocarboné avec 2 à 18 atomes de carbone et éventuellement un ou plusieurs hétéroatomes ;
- A est un groupe alkylidène avec 1 à 5 atomes de carbone ;
- les $R_j$ sont similaires ou différents et peuvent être sélectionnés parmi :

    - le groupe $A-PO_3H_2$, A ayant la signification susmentionnée ;
    - un groupe alkyle avec 1 à 18 atomes de carbone et pouvant porter des groupes [R-O($R_i$-O)n], R et $R_i$ ayant les significations susmentionnées ;
    - et le groupe :

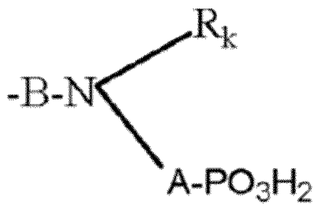

        - Rk désignant un groupe tel que $R_j$;
        - B désignant un groupe alcylène avec 2 à 18 atomes de carbone ;

- "n" est un nombre supérieur ou égal à 0 ;
- "r" est la somme des groupes [R-O($R_i$-O)$_n$] portés par tous les RJ ;
- "q" est le nombre de groupes [R-O($R_i$-O)$_n$] portés par Q ;
- la somme "r+q" est de 1 à 10 ;
- "y" est un entier de 1 à 3 ;
- Q, N et les $R_j$ peuvent former ensemble un ou plusieurs cycles, ces cycles pouvant en outre contenir un ou plusieurs autres hétéroatomes.

**13.** Composition de béton selon l'une quelconque des revendications 1 à 9, dans laquelle l'additif réducteur d'eau comprenant au moins un groupe phosphonique amino-alcylénique correspond à un composé ayant la formule (3) :

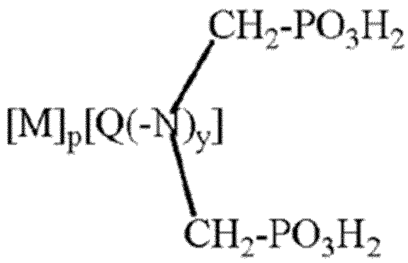

(3)

dans laquelle :

- M est un groupe hydrocarboné linéaire ou ramifié comprenant éventuellement un ou plusieurs hétéroatomes ;
- Q est un groupe hydrocarboné avec 2 à 18 atomes de carbone et éventuellement un ou plusieurs hétéroatomes ;
- "p" est le nombre de groupes [M] portés par Q, p étant de 1 à 10 ; et
- "y" est un entier de 1 à 3.

**14.** Composition de béton selon l'une quelconque des revendications précédentes, dans laquelle la teneur en agent réducteur d'eau comprenant au moins un groupe phosphonique amino-alcylénique varie de 0,01 % à 2 % en poids, de préférence de 0,05 % à 1 % en poids, plus préférentiellement de 0,1 % à 0,5 % en poids du poids total du liant.

**15.** Composition de béton selon l'une quelconque des revendications précédentes, dans laquelle le rapport pondéral

(agent réducteur d'eau comprenant au moins un groupe phosphonique amino-alcylénique) / (polymère cationique) est de préférence compris entre 2 et 8, plus préférentiellement entre 3 et 6.

**16.** Pré-mélange comprenant :

- un liant hydraulique, tel que défini dans l'une quelconque des revendications précédentes ;
- un polymère cationique tel que défini dans l'une quelconque des revendications précédentes ; et
- un additif réducteur d'eau comprenant au moins un groupe phosphonique amino-alcylénique tel que défini dans l'une quelconque des revendications précédentes.

**17.** Procédé de préparation d'une composition de béton, comprenant le mélange de

- le liant hydraulique tel que défini dans l'une quelconque des revendications précédentes,
- le polymère cationique tel que défini dans l'une quelconque des revendications précédentes,
- l'additif réducteur d'eau comprenant au moins un groupe phosphonique amino-alcoylénique tel que défini dans l'une quelconque des revendications précédentes,
- de l'eau,
- des granulats.

**18.** Objet en béton durci basé sur la composition de béton telle que définie dans l'une quelconque des revendications 1 à 15.

**19.** Utilisation d'un polymère cationique tel que défini dans l'une quelconque des revendications précédentes pour réduire le temps de prise d'une composition de béton comprenant :

- un liant hydraulique, le liant hydraulique comprenant du clinker de Portland et une addition minérale sélectionnée parmi le groupe constitué de calcaire, de cendres volantes ou une combinaison de ceux-ci, le calcaire et/ou les cendres volantes représentant au moins 50 % en poids du poids total du liant, tel que défini dans l'une quelconque des revendications précédentes ;
- un additif réducteur d'eau comprenant au moins un groupe phosphonique amino-alcylénique tel que défini dans l'une quelconque des revendications précédentes.

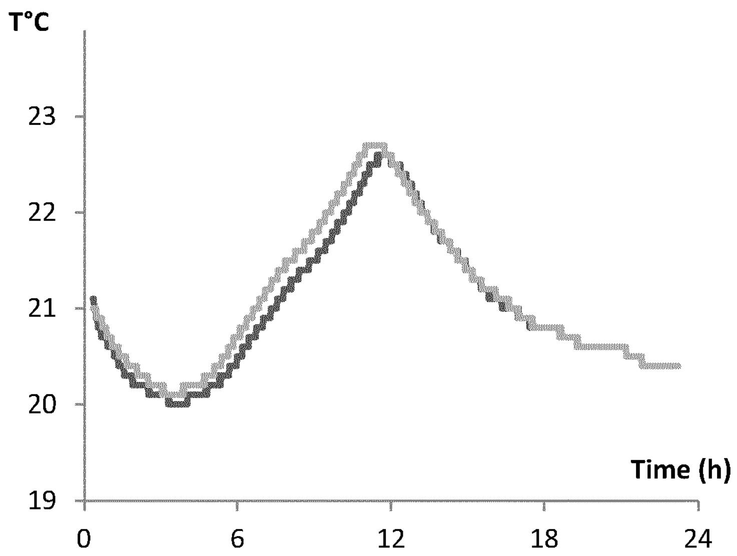
T°C
23
22
21
20
19
Time (h)
0
6
12
18
24

Fig. 1

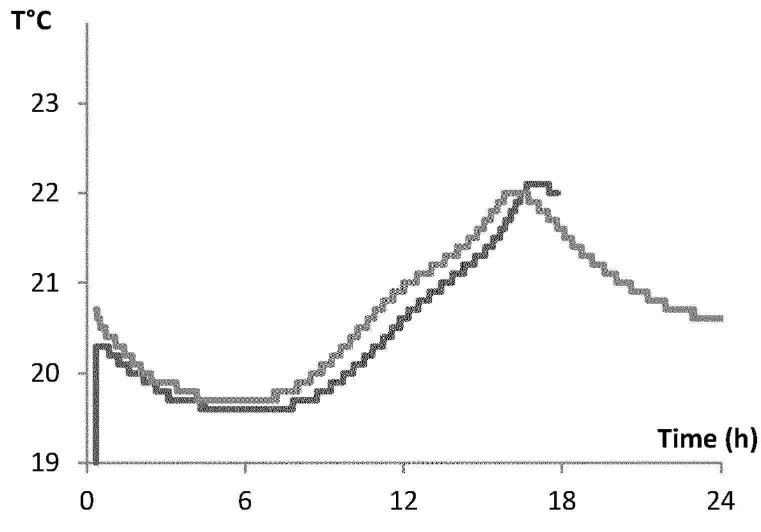
T°C
23
22
21
20
19
Time (h)
0
6
12
18
24

Fig. 2

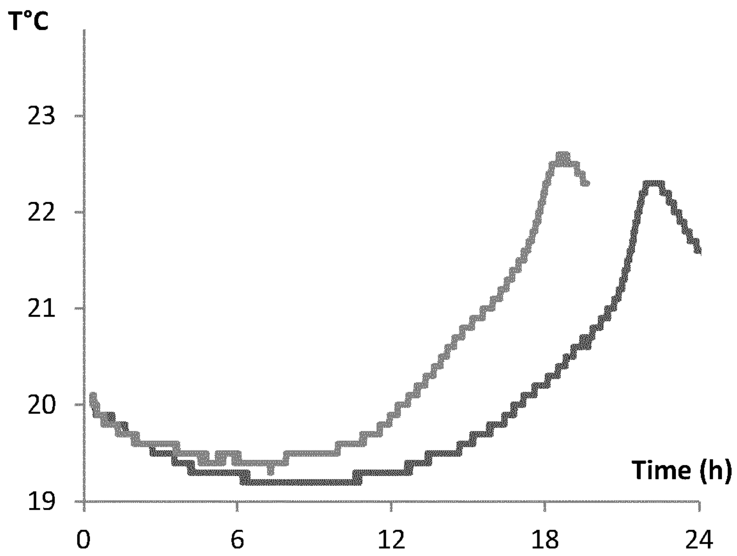


Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010040915 A2
- WO 2015063419 A1
- WO 2006032785 A
- WO 2007090948 A
- WO 2011107704 A
- EP 0663892 A
- WO 2011015781 A
- US 5292441 A
- US 3738945 A
- US 3725312 A
- FR 1042084


### Non-patent literature cited in the description


- Encyclopedia of Polymer Science & Technology. John Wiley & Sons, 1971, vol. 14, 717-740